Europäisches Patentamt

European Patent Office

Office européen des brevets

(19)

(11) **EP 1 153 143 B1**

(12) **FASCICULE DE BREVET EUROPEEN**

(45) Date de publication et mention
de la délivrance du brevet:
**22.10.2003 Bulletin 2003/43**

(21) Numéro de dépôt: **00903754.0**

(22) Date de dépôt: **09.02.2000**

(51) Int Cl.⁷: **C21C 1/02**

(86) Numéro de dépôt international:
**PCT/FR00/00298**

(87) Numéro de publication internationale:
**WO 00/047781 (17.08.2000 Gazette 2000/33)**

(54) **MELANGE DESULFURANT A BASE DE CARBURE DE CALCIUM ET/OU DE CHAUX**

ENTSCHWEFELUNGSMISCHUNG AUF BASIS VON CALCIUMCARBID UND/ODER KALK

DESULPHURIZING MIXTURE BASED ON CALCIUM CARBIDE AND/OR LIME

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **12.02.1999 FR 9901886**

(43) Date de publication de la demande:
**14.11.2001 Bulletin 2001/46**

(73) Titulaire: **SKW BELLEGARDE SAS**
**01200 Bellegarde sur Valserine (FR)**

(72) Inventeur: **ALARY, Jean-André**
**84800 L'Isle sur la Sorgue (FR)**

(74) Mandataire: **Mougeot, Jean-Claude et al**
**PECHINEY**
**Immeuble "SIS"**
**217, cours Lafayette**
**69451 Lyon Cedex 06 (FR)**

(56) Documents cités:
**EP-A- 0 849 366**          **FR-A- 2 747 132**
**US-A- 3 998 625**

• **PATENT ABSTRACTS OF JAPAN vol. 011, no. 222 (C-435), 18 juillet 1987 (1987-07-18) & JP 62 037304 A (KOBE STEEL LTD), 18 février 1987 (1987-02-18)**
• **PATENT ABSTRACTS OF JAPAN vol. 1998, no. 09, 31 juillet 1998 (1998-07-31) & JP 10 096008 A (NKK CORP), 14 avril 1998 (1998-04-14)**

## Description

### Domaine de l'invention

L'invention concerne un mélange désulfurant à base de carbure de calcium technique, de chaux, ou d'un mélange de ces deux produits, destiné à la désulfuration de la fonte et plus particulièrement de la fonte liquide obtenue au haut-fourneau avant passage au convertisseur.

On désigne par carbure de calcium technique le produit industriel résultant de la réduction de la chaux par le carbone au four électrique. Ce produit contient (en poids) de 70 à 88% de carbure de calcium pur, de 12 à 25% d'oxyde de calcium et 5% au plus d'impuretés diverses.

### Etat de la technique

Le traitement de la fonte liquide par le carbure de calcium ou la chaux pour en abaisser la teneur en soufre est connu depuis fort longtemps ; on peut citer par exemple le procédé de désulfuration par la chaux mis au point par l'IRSID et publié en mai 1956 dans la Revue de Métallurgie ( pages 338 et 339 ) par B.Trentini, L.Wahl et M.Allard.

Depuis les mélanges désulfurants employés ont été sans cesse améliorés ; on notera en particulier l'ajout dans ces mélanges d'agents de brassage constitués le plus souvent par des produits organiques, de métaux fortement réducteurs tels que l'aluminium, et de magnésium qui possède en tant que tel des propriétés désulfurantes spécifiques. Ces mélanges ont également fait l'objet d'améliorations successives au niveau de la granulométrie de leurs constituants dont le rôle a été étudié en particulier par le Professeur G.Irons. A titre d'exemple de ce type de mélange, on peut citer le brevet FR 2747132 de la demanderesse qui concerne un mélange à base de carbure de calcium contenant (en poids) de 1 à 20% de magnésium et de 5 à 15% d'aluminium, avec éventuellement d'autres additifs tels que la chaux, le carbonate de calcium, des produits carbonés et/ou des agents d'enrobage des grains en quantité totale d'au plus 30%.

EP-A-849 366 divulgue l'usage de scories de la métallurgie secondaire ayant une basicité (normalement $CaO/SiO_2$) de minimum 4 et ainsi comprenant plus de 50% de chaux à l'état pulvérisé pour désulfurer une fonte par injection avec une lance immergée. Telles scories ont des teneurs en soufre élevées resultant de la désulfuration des aciers.

### But de l'invention

La désulfuration de la fonte avec des mélanges à base de carbure de calcium et/ou de chaux donne des scories contenant une partie du carbure de calcium ou de la chaux mis en oeuvre qui n'ont pas réagi; pour des raisons environnementales et de coût, il est très important d'obtenir un rendement de désulfuration le plus élevé possible de façon à diminuer ces rejets à la fois coûteux et polluants. Les mélanges désulfurants à base de carbure de calcium et/ou de chaux selon l'invention ont ainsi pour but d'améliorer le rendement de la désulfuration.

### Objet de l'invention

L'invention a pour objet un mélange désulfurant en poudre (de préférence de granulométrie inférieure à 250 μm) constitué d'au moins 50% (en poids) de carbure de calcium technique et/ou de chaux, éventuellement de magnésium jusqu'à 40%, d'aluminium jusqu'à 20% et d'autres additifs tels que des produits carbonés et/ou des agents d'enrobage en quantité totale d'au plus 10%, le mélange caractérisé en ce qu'il contient du sulfate de calcium en quantité correspondant à une teneur en soufre du mélange étant comprise entre 1% et 3,5% en poids, et de préférence entre 1,5 et 2%.

On entend par teneur en soufre la teneur totale du mélange quelle que soit la nature du ou des composés chimiques dans lesquels le soufre est engagé.

### Description de l'invention

L'invention repose sur la constatation, a priori paradoxale, faite par la demanderesse qu'un mélange désulfurant à base de poudre micronisée de carbure de calcium et/ou de chaux donne de meilleurs rendements si on y ajoute à faible dose un produit contenant du soufre.

Pour évaluer les performances d'un mélange désulfurant, la demanderesse a mis au point un essai type qu'elle a reproduit autant de fois que nécessaire pour apprécier et comparer les résultats que donnent les différents produits existants et les produits mis au point dans le cadre de l'invention.

Cette méthode est décrite ci-dessous, les conditions opératoires ont été affinées pour obtenir une bonne reproductibilité dans les résultats :

- opération dans un four HF de 800kW sur 400kg de fonte de teneur en soufre initial 0,040% ;
- température de 1500°C en début d'opération ;
- injection de 400g de produit à tester avec un débit de 40 ± 2 g / mn et de 2kg de laitier (SiO2 10%, CaO 45%, Al2O3 45% ) avec maintien du four en puissance pour obtenir 1450°C en fin d'opération ;
- échantillonnage de la fonte liquide en fin d'opération.

La fiabilité du test a été déterminée en répétant une opération type, conduite avec un mélange désulfurant de composition constante ; l'écart type obtenu sur l'abaissement de la teneur en soufre mesurée est de 0,002% (20 ppm) soit 5 % de la teneur initiale en soufre. Pour cette raison chaque produit est testé trois fois, ce qui permet de diviser l'écart type sur le résultat par $\sqrt{3}$ et de le ramener ainsi à 0,0012% (12 ppm).

Le moyen de contrôle étant défini, différents mélanges désulfurants ont été évalués. Les résultats font apparaître des performances sensiblement améliorées chaque fois que l'on ajoute à un mélange désulfurant un produit contenant un composé du soufre.

On obtient en particulier de bons résultats en utilisant comme apport de soufre, en complément ou en remplacement de la chaux, soit du sulfate de calcium, soit des cendres volantes issues de la combustion de charbons tels que les lignites très chargés en soufre, contenant de 5 à 50%, et de préférence 8 à 15% de sulfate de calcium, cette teneur étant exprimée en $CaSO_4$ anhydre.

Selon l'invention, la teneur totale en soufre du mélange désulfurant, résultant à la fois du soufre contenu dans les matières premières utilisées, notamment dans le carbure de calcium technique sous forme de CaS, et du soufre ajouté, est comprise entre 1% et 3,5%, l'optimum se situant entre 1,5 et 2%. On peut ajouter, de manière connue en soi, au carbure de calcium et/ou à la chaux du magnésium (jusqu'à 40% en poids), ou de l'aluminium (jusqu'à 20%) en poudre, et des produits carbonés à forte teneur en matières volatiles et/ou des agents d'enrobage (jusqu'à 10% au total). Par contre, l'ajout de $CaCO_3$ s'avère inefficace et celui de $CaF_2$ plutôt nuisible.

Les mélanges désulfurants selon l'invention conduisent à une amélioration significative du rendement de désulfuration pour des traitements de même durée. Il est probable que l'addition de soufre contribue à augmenter la cinétique de désulfuration, ce qui présente un intérêt industriel, dans la mesure où l'opération de désulfuration de la fonte constitue le plus souvent un goulot d'étranglement dans les aciéries.

**Exemples**

**Exemple 1**

On a préparé 10 kg d'un mélange désulfurant en poudre de granulométrie 160 μm contenant :

- 7 kg de carbure de calcium technique dosé à 310 litres d'acétylène au kg de composition (en poids) : 88,5% $CaC_2$, 10,4% CaO et 1,1% CaS,
- 2,25 kg de chaux vive contenant 0,005% de soufre,
- 0,75 kg de houille à 38% de matières volatiles et 0,85% de soufre.

Ce mélange contient donc 61,9% de $CaC_2$, 29,8% de CaO et 0,41% de soufre, essentiellement sous forme de CaS. Il a été divisé en 4 parts égales de 2,5 kg.

Avec la première part, on a effectué le test de désulfuration décrit plus haut avec une fonte dont la teneur en soufre était de 0,40 %. Les 3 essais de désulfuration ont conduit à des valeurs respectives en soufre final de 0,0124% ; 0,0142% ; 0,0147%, soit une valeur moyenne de 0,0137%.

Le rendement de désulfuration moyen est exprimé en nombre de moles de soufre fixées sur le total du nombre de moles de $CaC_2$ pur et du nombre de moles de CaO pur, soit la formule :

$$\text{Rendement } R = (M_f/M_0)(S_0 \ S_f) / (\%CaC_2/64 + \%CaO/56) \ 32$$

dans laquelle on désigne par :

$S_0$ = teneur initiale en soufre de la fonte (en %)
$S_f$ = teneur finale en soufre après traitement (en %)
$M_f$ = masse de fonte à traiter (en kg)
$M_0$ = masse de mélange désulfurant utilisé (en kg).

On a donc, dans le cas de l'essai $M_f/M_0$ = 1000

%$CaC_2$ = teneur pondérale en carbure de calcium pur du mélange
%$C_aO$ = teneur pondérale en chaux libre du mélange (c'est-à-dire la chaux non combinée, comme par exemple dans le sulfate ou le silicate de calcium)

En appliquant la formule au traitement effectué avec la première part de mélange, on obtient R = 54,8 %.

**Exemple 2**

La seconde part de l'échantillon de l'exemple 1 a fait l'objet d'un ajout de 150 g de sulfate de calcium anhydre. L'analyse de l'échantillon de 2,65 kg obtenu a donné :
$CaC_2$ = 58,44% CaO = 28,09% S = 1,72% (principalement sous forme de CaS et $CaSO_4$).
Les 3 opérations de désulfuration ont été refaites et ont donné les résultats respectifs suivants en soufre final : 0,0105% ; 0,0095% ; 0,0110%, soit une valeur moyenne de 0,0102%. Le rendement moyen de désulfuration est alors de 65,8%.

**Exemple 3**

La troisième part de l'échantillon de l'exemple 1 a fait l'objet d'un ajout de 275 g de sulfate de calcium anhydre. L'analyse de l'échantillon de 2,775 kg obtenu donne :
$CaC_2$ = 55,81% CaO = 26,83% S = 2,70%
Les 3 opérations de désulfuration ont été refaites et ont donné les résultats respectifs suivants en soufre final : 0,0094% ; 0,0113% ; 0,0105%, soit une valeur moyenne de 0,0103%. Le rendement moyen de désulfuration est alors de 68,7%.

**Exemple 4**

La quatrième part de l'échantillon de l'exemple 1 a fait l'objet d'un ajout de 1 kg de cendres volantes de composition (en poids):
$CaSO_4$ = 20,5% ; $CaCO_3$ = 1,8% ; CaO = 6,4% ; 2 $CaO,SiO_2$ = 60,2% ; $Al_2O_3$ = 9,3% ; MgO = 1,7%
L'analyse de l'échantillon de 3,5 kg obtenu donne :
$CaC_2$ = 44,25% CaO = 23,10% S = 1,67%
Les opérations de désulfuration ont été refaites et ont donné les résultats respectifs suivants en soufre final : 0,0148 % ; 0,0132 % ; 0,0142 %, soit une valeur moyenne de 0,0140%. Le rendement moyen de désulfuration est de 73,6%.

**Revendications**

1. Mélange désulfurant en poudre pour traitement de la fonte liquide par injection, constitué (en poids) à plus de 50% de carbure de calcium technique et/ou de chaux, et éventuellement de magnésium jusqu'à 40%, d'aluminium jusqu'à 20%, et d'autres additifs tels que des produits carbonés et/ou des agents d'enrobage en quantité totale d'au plus 10%, **caractérisé en ce qu'**il contient du sulfate de calcium en quantité correspondant à une teneur en soufre comprise entre 1% et 3,5%.

2. Mélange désulfurant selon la revendication 1 dans lequel l'apport de sulfate de calcium est effectué par remplacement d'une partie de la chaux par des cendres volantes.

3. Mélange désulfurant selon l'une des revendications1 ou 2, **caractérisé en ce que** sa granulométrie est inférieure à 250 μm.

**Patentansprüche**

1. Pulvrige Entschwefelungsmischung zur Behandlung von flüssigem Roheisen durch Injektion, bestehend (in Masse) zu mehr als 50 % aus technischem Kalziumkarbid und/oder Kalk und eventuell Magnesium bis zu 40 %, Aluminium bis zu 20 % und weiteren Zusätzen wie Kohlenstoffprodukten und/oder Schichtstoffen in einer Gesamtmenge von höchstens 10 %, **dadurch gekennzeichnet, dass** sie Kalziumsulfat in einer Menge enthält, die einem Schwefelgehalt zwischen 1 und 3,5 % entspricht.

2. Entschwefelungsmischung nach Anspruch 1, **dadurch gekennzeichnet, dass** die Zugabe von Kalziumsulfat durch Ersatz eines Teils des Kalks durch Flugasche erfolgt.

3. Entschwefelungsmischung nach einem der Ansprüche 1 oder 2, **dadurch gekennzeichnet, dass** ihre Korngröße kleiner als 250 µm ist.

**Claims**

1. Powdered desulphurizing mixture for the treatment of liquid iron by injection, constituted (by weight) by more than 50% of technical calcium carbide and/or of lime, and possibly by magnesium up to 40%, by aluminium up to 20%, and by other additives such as carbonaceous products and/or coating agents in total quantity of at most 10%, **characterized in that** it contains calcium sulphate in a quantity corresponding to a sulphur content comprised between 1% and 3.5%.

2. Desulphurizing mixture according to claim 1, in which the addition of calcium sulphate is effected by replacement of a portion of the lime by fly ash.

3. Desulphurizing mixture according to one of claims 1 or 2, **characterized in that** the particle size is less than 250 µm.